(19) Europäisches Patentamt
European Patent Office
Office européen des brevets

(11) **EP 3 241 642 B1**

(12) **EUROPÄISCHE PATENTSCHRIFT**

(45) Veröffentlichungstag und Bekanntmachung des Hinweises auf die Patenterteilung:
**20.03.2019 Patentblatt 2019/12**

(51) Int Cl.:
**B23K 20/12** (2006.01)   **B23K 33/00** (2006.01)
B23K 101/06 (2006.01)   B23K 101/10 (2006.01)

(21) Anmeldenummer: **17000774.4**

(22) Anmeldetag: **05.05.2017**

(54) **DURCH AUFGLEITENDES REIBSCHWEISSEN ZU VERBINDENDE BAUTEILE MIT EINER FÜGESTELLENSTRUKTUR UND VERFAHREN ZUM VERBINDEN VON BAUTEILEN DURCH REIBSCHWEISSEN**

COMPONENTS TO BE CONNECTED BY FRICTION WELDING WITH A JOINT-SITE STRUCTURE AND METHOD OF CONNECTING COMPONENTS BY MEANS OF FRICTION WELDING

COMPOSANTS À ASSEMBLER PAR SOUDAGE PAR FRICTION AVEC UNE STRUCTURE D'ASSEMBLAGE ET PROCÉDÉ D'ASSEMBLAGE DE COMPOSANTS PAR SOUDAGE PAR FRICTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.05.2016 DE 102016005464**

(43) Veröffentlichungstag der Anmeldung:
**08.11.2017 Patentblatt 2017/45**

(73) Patentinhaber: **IFA-Technologies GmbH**
**39340 Haldensleben (DE)**

(72) Erfinder:
• **SCHMICKER, David**
**39108 Magdeburg (DE)**
• **KREIBICH, Marcus**
**39108 Magdeburg (DE)**
• **TROMMER, Frank**
**39108 Magdeburg (DE)**
• **KRÜGER, Andreas**
**39218 Schönebeck/Elbe (DE)**

(74) Vertreter: **Patentanwälte Schuster, Müller & Partner mbB**
**Olvenstedter Strasse 15**
**39108 Magdeburg (DE)**

(56) Entgegenhaltungen:
**DE-A1- 3 626 009      DE-A1-102010 049 872**
**JP-A- S57 190 793      JP-A- 2004 138 209**

## Beschreibung

## Stand der Technik

Die Erfindung geht aus von durch aufgleitendes Reibschweißen zu verbindenden Bauteilen, beispielsweise Hohlwellen, nach dem Oberbegriff des Anspruchs 1 sowie einem Verfahren zum Verbinden von Bauteilen durch aufgleitendes Reibschweißen nach dem Oberbegriff des Anspruchs 10.

Beim aufgleitenden Reibschweißen werden die Fügebereiche der miteinander zu verbindenden Bauteile so gestaltet, dass sie sich nach erfolgtem Reibschweißen zumindest teilweise koaxial überlappen. Das bedeutet, dass mindestens eines der Bauteile mindestens einen radialen Absatz aufweisen muss, mit dem es das jeweils andere Bauteil aufnimmt. Dabei kann der Absatz sowohl vom Außendurchmesser her durch eine Reduzierung des Außendurchmessers als auch vom Innendurchmesser her durch eine Vergrößerung des Innendurchmessers, jeweils ausgehend von der Stirnfläche des Bauteils über eine bestimmte axiale Länge des Bauteils gebildet werden. Bei beiden Gestaltungen werden in der Regel Freiräume zur Aufnahme des beim Reibschweißen entstehenden plastifizierten und/oder flüssigen Schweißgutes vorgesehen. Als Fügeflächen können sowohl Bereiche der Stirnflächen der Bauteile als auch Teile der sich koaxial überlappenden Bereiche der Bauteile dienen.

Im einfachsten Fall ist in die Stirnfläche eines der Bauteile als innerer Absatz ein Freiraum eingearbeitet, der ein zylindrisches Bauteil mit komplementären Außendurchmesser aufnimmt. Zur Schaffung einer sog. Schweißwulstkammer zur Aufnahme des beim Reibschweißen anfallenden Schweißwulstmaterials kann das zylindrische Bauteil eine Fase, einen kleinen Außenabsatz oder in seiner Stirnfläche eine Ringnut aufweisen. Als Fügeflächen dienen die sich gegenüberliegenden Stirnflächen beider Bauteile (DE 40 22 303 A1).

Bei einer anderen Fügestellenstruktur zum Reibschweißen eines Welle-Nabe-Verbundwerkstücks weisen Welle und Nabe mindestens einen äußeren und einen inneren Absatz mit einer geringfügigen radialen Überdeckung auf, aus der beim Reibschweißen eine konische Bindezone entsteht. Die Durchmesser von Welle und Nabe sind beiderseits des bzw. der Absätze so ausgelegt, dass zwischen Welle und Nabe ringförmige Hohlräume vorhanden sind, in die sich das teigige Material des Reibschweißprozesses ausbreiten kann und dadurch eine verbreiterte Bindezone entsteht (DE 103 36 668 A1).

Diese beiden Fügestellenstrukturen sind auf die Verbindung verhältnismäßig kompakter Teile ausgerichtet. Die Verbindung von Bauteilen mit größeren Baulängen, beispielsweise das axiale Aneinanderreihen von Abschnitten von Hohlwellen, lässt sich mit den oben beschriebenen Fügestellenstrukturen nicht realisieren.

Zum Reibschweißen von aufeinanderfolgenden Abschnitten von Hohlwellen ist bekannt, die zu verschweißenden Enden der Wellenabschnitte stufenförmig auszubilden, so dass der reibverschweißte Bereich als ein axialer Steckbereich ausgebildet ist, bei dem die miteinander reibverschweißten Enden der Wellenabschnitte koaxial ineinandergreifen. Die Absätze beider Steckbereiche sind konisch ausgeformt. Auf diese wirkt die Anpresskraft beim Reibschweißen. Bei der Anordnung von mehreren konischen Absätzen bilden sich mehrere ringförmige Schweißnähte aus. Die gestufte Fügestellenstruktur dient auch der Aufrechterhaltung der koaxialen Zentrierung der Wellenabschnitte während des Reibschweißens (DE 10 2008 064 267 A1).

Der Nachteil dieser Fügestellenstruktur besteht darin, dass damit nur verhältnismäßig dickwandige Hohlwellen miteinander bzw. Hohlwellenteile mit Kegel- oder Zahnrädern verschweißt werden können. Für dünnwandigere Bauteile ist die Stützwirkung der radialen Prozesskräfte aus den Schweißteilen heraus jedoch nicht ausreichend, welches den Einsatz dieser Fügestellenstruktur einschränkt. Nachteilig ist ferner, dass die Durchmesser der stufenförmigen Absätze genau aufeinander abgestimmt sein müssen, um das plastifizierte Reibschweißmaterial aufzunehmen. Bei übermäßig entstehendem Reibschweißmaterial kann dieses sowohl nach außen aus- als auch in den Innenraum der Hohlwelle eintreten, was wiederum eine Nachbearbeitung erfordert.

Zum Reibschweißen von Kolben für Verbrennungsmotoren werden die Oberteile mit den Unterteilen der Kolben durch Reibschweißen miteinander verbunden. Für dieses Verfahren sind zwei Fügestellenstrukturen bekannt. Zum einen werden das Ober- und Unterteil in der Art vorbereitet, dass die beiden Teile konisch ineinandergesteckt werden und somit zum Reibschweißen eine Zentrierung erfolgt. Die beim Reibschweißprozess entstehende Schweißwulst wird in einen angrenzenden Spalt, der das gesamte Volumen des Schweißgutes aufnimmt, gedrückt. Zum anderen werden die Bauteile in I-Stoß miteinander verschweißt. Dazu weisen die Bauteile mehrere Absätze auf. Eines der Bauteile weißt einen zusätzlichen Absatz auf, wodurch ein ringförmiger Hohlraum entsteht, der zur Aufnahme der Schweißwulst dient (DE 10 2004 019 012 A1).

Der Nachteile dieser beiden Varianten liegt darin, dass auf mindestens einer Außen- oder Innenseite immer eine Schweißwulst entsteht, die zwar bei der Anwendung von Kolben nicht stört, jedoch bei dünnwandigen Rohren zu einer Nacharbeit führt.

Des Weiteren ist ein Verfahren zur Herstellung von Kolbenzylinderanordnungen bekannt, wobei der Zylinderdeckel sowie -boden mit dem Zylinder durch Reibschweißen unlösbar stoffschlüssig verbunden wird. Der Außendurchmesser von Zylinderdeckel und -boden entsprechen dem Außendurchmesser des Zylinders. Auf der Seite, mit der sie mit dem Zylinder verschweißt werden, ist ein Absatz eingearbeitet, sodass der Zylinderdeckel bzw. -boden auf den Zylinder gesteckt werden kann. Zusätzlich ist in den Absatz eine umlaufende Fuge eingearbeitet, die die durch das Reibschweißen auftretende Schweißwulst aufnimmt (DE 40 22 447 A1).

Die Nachteile dieses Verfahrens sind zum einen, dass auf einer Seite die Schweißwulst nach außen tritt, was eine Nacharbeit fordert. Zum anderen ist dieses Verfahren, bedingt durch die Nahtvorbereitung, nicht für dünnwandige Hohlwellen geeignet. Der angewendete Stoß ist ein Eckstoß, für dünnwandige Hohlwellen wird jedoch ein I-Stoß benötigt.

Eine andere Fügestruktur zum Verbinden eines Lagerteils mit einer Hülse sieht ebenfalls eine Reduzierung des Außendurchmessers des Lagerteils vor. Am Übergang von dem reduzierten kleineren Durchmesser zum größeren Nenndurchmesser des Lagerteils ist zusätzlich noch eine umlaufende Nut eingearbeitet. Die Nahtvorbereitung an der Hülse sieht eine koaxiale Bohrung im Hülsenboden vor, die dem Durchmesser des kleineren Außendurchmessers des Rohres entspricht. Für den Reibschweißprozess wird das Lagerteil mit dem reduzieren Außendurchmesser in die Bohrung der Hülse gesteckt (JP 59007490 A).

Der Nachteil dieser Fügestruktur besteht darin, dass bei einem Verschweißen von zwei dünnwandigen Rohren, diese unterschiedliche Außendurchmesser aufweisen müssten, wodurch immer ein äußerer Absatz entstehen würde. Zudem ist bei dem Rohr mit dem größeren Außendurchmesser zur Erzeugung einer stirnseitigen Fügefläche ein radial nach innen ragender Absatz erforderlich, der bei den Rohren durchfließenden Fluiden strömungstechnische Nachteile mit sich bringt.

Schließlich ist ein Verfahren zur Herstellung eines reibgeschweißten Welle-Scheibe-Verbundstückes bekannt, mit dem auch dünnwandige Hohlwellen verschweißt werden können. Hierzu weisen der Außendurchmesser der Welle und der Innendurchmesser der Scheibe mindestens eine komplementäre Abstufung auf, wobei der Innendurchmesser jeweils etwas kleiner ist als der in Zusammenbaulage gegenüberliegende Außendurchmesser. In diesen Bereichen der sog. Schweißüberlappung bildet sich die Reibschweißverbindung heraus, wobei in dem Bereich mit dem kleineren Außendurchmesser der Hohlwelle diese naturgemäß eine geringere Wandstärke aufweist. Deshalb ist dieser Bereich von innen mit einem Stützelement versehen, das beim Reibschweißen durch eine plastische Verformung des an dieser dünnwandigen Hohlwelle von dem sich bildenden ringförmigen Wulstes umschlossen wird. Nach dem Erkalten des Welle-Scheibe-Verbundstückes wird ein fester Sitz des Stützelements im Innenraum der Hohlwelle erreicht (DE 199 34 855 C1). Der Nachteil dieses Verfahrens besteht in dem zusätzlichen Aufwand, den die Anfertigung und Positionierung des Stützelements erfordert.

**Die Erfindung und ihre Vorteile**

Durch aufgleitendes Reibschweißen zu verbindende Bauteile gemäß der Erfindung sind im Anspruch 1 definiert. Die erfindungsgemäße Fügestellenstruktur für durch Reibschweißen zu verbindende Bauteile mit den kennzeichnenden Merkmalen des Anspruchs 1 hat gegenüber dem oben genannten Stand der Technik den wesentlichen Vorteil, dass auch dünne Hohlwellen ohne zusätzliche Stützelemente exakt koaxial und ohne eine Nachbearbeitung durch aufgleitendes Reibschweißen in hoher Qualität miteinander verbunden werden können. Dazu wird die Abstufung der Fügestellen so gestaltet, dass eine Stützung der radialen Prozesskräfte im koaxialen Steckbereich der Bauteile gewährleistet ist. Zudem werden durch die erfindungsgemäße Fügestellenstruktur Verunreinigungen und Späne aus dem Schweißprozess sowohl nach innen als auch nach außen abgefangen. Hingegen können durch die Erwärmung entstehende Prozessgase ungehindert nach außen austreten.

Diese Vorteile werden dadurch erreicht, dass die miteinander zu verschweißenden Enden der Bauteile jeweils einen koaxialen Steckbereich aufweisen und diese Steckbereiche beim Reibschweißen koaxial so ineinandergreifen, dass sich zwischen den Mantelflächen der ineinandergreifenden Steckbereiche ein radialer Spalt befindet. Ein solcher Steckbereich wird durch mindestens einen sich an mindestens einem der Bauteile befindenden Absatz mit einem gegenüber seinem Außendurchmesser kleineren Durchmesser gebildet. Durch diesen Absatz entsteht eine gegenüber der Stirnfläche dieses Bauteils axial zurückgesetzte ringförmige Stirnfläche, die als Fügefläche für das Reibschweißen ausgebildet ist. Anstelle der Bezeichnung "Absatz" ist auch der Begriff "Stufe" gebräuchlich.

Erfindungsgemäß ist der mindestens eine Absatz des mindestens einen Bauteils, an dem sich die axial zurückgesetzte ringförmige Fügefläche befindet, in seinem Kehlbereich mit einem radialen Freistich versehen, der ein Aufnahmevolumen für Reibschweißmaterial bietet. Durch diesen Freistich erfährt die ringförmige Wandung des Bauteils eine Schwächung ihres Querschnitts. Dieser reduzierte Querschnittsbereich wirkt als Wärmedrossel für die Wärme, die sich von dem Reibschweißbereich zu dem sich an den Freistich anschließenden, im Querschnitt wieder zunehmenden bzw. durch den Freistich nicht veränderten Bereich ausbreitet. Dieser den ursprünglichen Querschnitt aufweisende Bereich bildet einen radialen Stützsteg, der in Verbindung mit der ihm koaxial gegenüberliegenden Mantelfläche des anderen Bauteils eine Stützung der radialen Prozesskräfte gewährleistet.

Weisen beide miteinander zu verschweißenden Bauteile die gleiche Anzahl Absätze oder die gleiche Anzahl von Stufen eines Absatzes auf, so ist die Länge jedes Absatzes ihrer Absätze bzw. Stufen so ausgelegt, dass bei Berührung der einen Stirnfläche des einen Bauteils mit der axial zurückgesetzten ringförmigen Fügefläche des anderen Bauteils die anderen sich in gleicher radialer Position gegenüberliegenden Stirnflächen dieser Bauteile bis zum Abschluss des Reibschweißvorgangs immer noch freiliegend sind, d. h., sich also nicht berühren, solange die axiale Prozesskraft des Reibschweißvorgangs noch wirksam ist. Dadurch ist gewährleistet, dass die axiale Prozesskraft während des gesamten Reibschweißvorganges allein über die ringförmige Fügefläche bzw. ringförmigen Fügeflächen übertragen wird, wodurch eine zuverlässige Ausbildung der Reibschweißverbindung erreicht wird. Mit anderen Worten: die Auslegung der Länge des oder der axialen Spalte sorgt dafür, dass sich an den anderen sich gegenüberliegenden Stirnflächen keine Reibschweißverbindung ausbildet. Sicherheitshalber ist die Länge der Absätze bzw. Stufen eines Absatzes so ausgelegt, dass zwischen der Stirnfläche des einen Bauteils und der durch den Absatz bzw. die Stufe des Absatzes bedingten in gleicher radialer Position gegenüberliegenden radialen Ringfläche des anderen Bauteils auch nach Abschluss des Reibschweißprozesses ein schmaler axialer Ringspalt vorhanden ist. Es ist aber auch möglich, dass sich diese Stirnflächen am Ende des Reibschweißprozesses gerade berühren.

Nach einer vorteilhaften Ausgestaltung der Erfindung ist die Anzahl der Absätze oder Stufen an beiden miteinander zu verbindenden Bauteilen gleich. Das ermöglicht an beiden Bauteilen gleiche Innen- und Außendurchmesser ohne störende Absätze. Das ist insbesondere dann von Vorteil, wenn die Bauteile innen und/oder außen mit einer Strömung beaufschlagt sind, wenn durch den Innenraum der Bauteile z. B. Leitungen oder Kabel führen, für deren Durchführung ein Absatz oder eine Stufe ein Hindernis darstellt, oder wenn die Bauteile an ihrem Außenmantel mit einem Überzug versehen werden müssen.

Nach einer besonders vorteilhaften Ausgestaltung der Erfindung besteht die Fügestellenstruktur jedes Bauteils aus mindestens zwei Absätzen bzw. mindestens zwei Stufen, wobei der Freistich jeweils in den von der äußeren Stirnseite des Bauteils aus gesehen ersten Absatz bzw. die erste Stufe eingebracht ist. Dadurch entsteht beiderseits der Fügestelle mindestens ein radialer Stützsteg, bei jeweils zwei Absätzen bzw. Stufen je Bauteil also auch zwei Stützstege, wobei der eine radial nach innen wirkende und der andere radial nach außen wirkende Prozesskräfte aufnimmt. Dadurch wird eine genauere Koaxialität der beiden Bauteile während des Schweißprozesses erreicht.

Nach einer zusätzlichen vorteilhaften Ausgestaltung der Erfindung sind die Fügeflächen kegelstumpfartig ausgebildet, z. B. mit einer Anfasung versehen. Dadurch wird eine verbesserte Zentrierwirkung der Steckbereiche der Bauteile bereits unmittelbar vor dem Reibschweißen erreicht.

Nach einer anderweitigen vorteilhaften Ausgestaltung der Erfindung verläuft die eine Flanke des Freistichs in radialer Verlängerung der ringförmigen Fügefläche. Dadurch kann sich Reibschweißmaterial direkt in den Freistich ausbreiten.

Nach einer ebenfalls vorteilhaften Ausgestaltung der Erfindung verläuft die andere, der Fügefläche gegenüberliegende Flanke des Freistichs in einem Winkel kleiner 90° zur Längsachse der Bauteile. Dadurch vergrößert sich das Volumen des Freistichs zur Aufnahme des Reibschweißmaterials, ohne dass die Stützwirkung des am Absatz verbleibenden Stützstegs zur gegenseitigen Abstützung der Mantelflächen der Bauteile im koaxialen Steckbereich beeinträchtigt wird.

Nach einer zusätzlichen vorteilhaften Ausgestaltung der Erfindung ist für eine ausreichende Anbindung der beiden Bauteile und für die Kraftübertragung eine minimale Überlappung der Reibflächen von 20% festgelegt. Dazu wird ein Verhältnis zwischen der Wandstärke im koaxialen Steckbereich und des mindestens einen Absatzes festgelegt. Dieses Verhältnis besagt, dass der mindestens eine Absatz mindestens dem 0,6fachen der Wandstärke des Bauteils im koaxialen Steckbereich beträgt.

Nach einer vorteilhaften Ausgestaltung der Erfindung ist für ein Optimum zwischen der Bauteilfestigkeit und der Begrenzung der Wärmeleitung von der Fügestelle die Wandstärke der Wärmedrossel festgelegt. Hierzu beträgt die Wandstärke der Wärmedrossel das 0,1 bis 0,3fache der Wandstärke des mindestens einen Absatzes.

Nach einer weiteren vorteilhaften Ausgestaltung der Erfindung ist die Wandstärke des Stützsteges genau definiert. Damit die Bauteile leichtgängig ineinander geführt werden können, muss ein koaxialer Spalt im Steckbereich zwischen den beiden zu verscheißenden Bauteilen vorhanden sein. Daher ist die Wandstärke des Stützsteges kleiner gleich der Differenz aus der Wandstärke des Bauteils in seinem koaxialen Steckbereich und dem 1,1fachen der Wandstärke des mindestens einen Absatzes des Bauteils.

Ein Verfahren zum Verbinden von Bauteilen durch Reibschweißen ist im Anspruch 10 definiert. Dieses Verfahren mit den kennzeichnenden Merkmalen des Anspruchs 10 hat gegenüber dem oben genannten Stand der Technik den wesentlichen Vorteil, dass während des gesamten Reibschweißprozesses gewährleistet ist, dass die Reibschweißverbindung nur an den vorgesehenen ringförmigen Fügeflächen erfolgt, also nur an jenem Absatz oder jenen Absätzen, an dem bzw. an denen zuvor durch den radialen Freistich eine Wärmedrossel und ein Stützsteg erzeugt wurde. Während des Reibschweißprozesses wird zumindest eines der Bauteile in Rotation versetzt und auf das nicht rotierende Bauteil koaxial gerieben. Durch den Reibvorgang unter einer bestimmten Axialkraft wird Reibwärme freigesetzt, welche das Material an der Fügestelle auf nahezu Schmelztemperatur, bei unterschiedlichen Werkstoffen des niedriger schmelzenden Werkstoffes, erwärmt. Das Material entfestigt und beginnt zu Fließen, worauf aufgrund der Axialkraft eine Wulst aus der Fügestelle herausgepresst wird, die im Wesentlichen von dem radialen Freistich aufgenommen wird. Die Bauteile verkürzen mit Einsatz der Wulstbildung stetig. Nachdem eine gewisse Verkürzung, welche kleiner als die anfänglich eingestellte Breite des axialen Spalts ist, zurückgelegt wurde, wird die Rotation abgebremst und die Bauteile mit gleicher oder höherer axialer Kraft zusammengestaucht. Aufgrund der unterbrochenen Wärmequelle kühlt das Material ab und verfestigt sich wieder. Die Axialkraft wird so lange gehalten, bis die Stauchverkürzung gesättigt ist und die Bauteile stoffschlüssig miteinander verbunden sind.

Weitere Vorteile und vorteilhafte Ausgestaltungen der Erfindung sind der nachfolgenden Beschreibung, den Ansprüchen und den Zeichnungen entnehmbar.

## Zeichnung

Ein bevorzugtes Ausführungsbeispiel des erfindungsgemäßen Gegenstands ist anhand einer Verbindung von zwei Rohren in der Zeichnung dargestellt und wird im Folgenden näher erläutert. Es zeigen

Fig. 1a    die Ausgangsgeometrie einer erfindungsgemäßen Fügestellenstruktur zweier zu verschweißender Rohre mit jeweils zwei Absätzen,

Fig. 1b    die Fügestellenstruktur aus Fig. 1a in vergrößerter Darstellung,

Fig. 1c    die Fügestellenstruktur aus Fig. 1a und 1b mit Kennzeichnung der Wandstärken,

Fig. 2a    die beiden verschweißten Rohre nach Abschluss des Reibschweißprozesses,

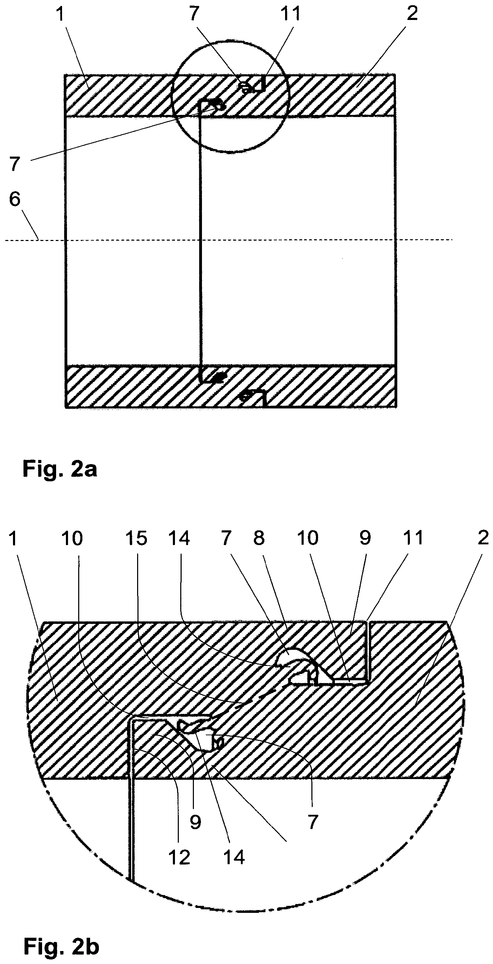

Fig. 2a    die Fügestelle aus Fig. 2a in vergrößerter Darstellung,

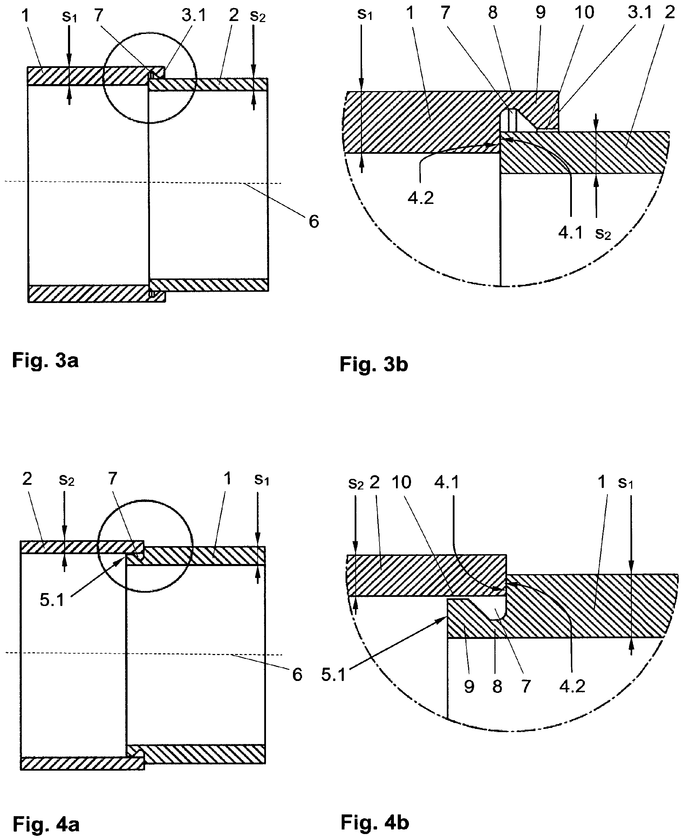

Fig. 3a    die Ausgangsgeometrie einer erfindungsgemäßen Fügestellenstruktur zweier zu verschweißender Rohre, von denen nur eines einen inneren Absatz aufweist,

Fig. 3b    die Fügestellenstruktur aus Fig. 3a in vergrößerter Darstellung,

Fig. 4a    die Ausgangsgeometrie einer erfindungsgemäßen Fügestellenstruktur zweier zu verschweißender Rohre, von denen nur eines einen äußeren Absatz aufweist,

Fig. 4b    die Fügestellenstruktur aus Fig. 4a in vergrößerter Darstellung,

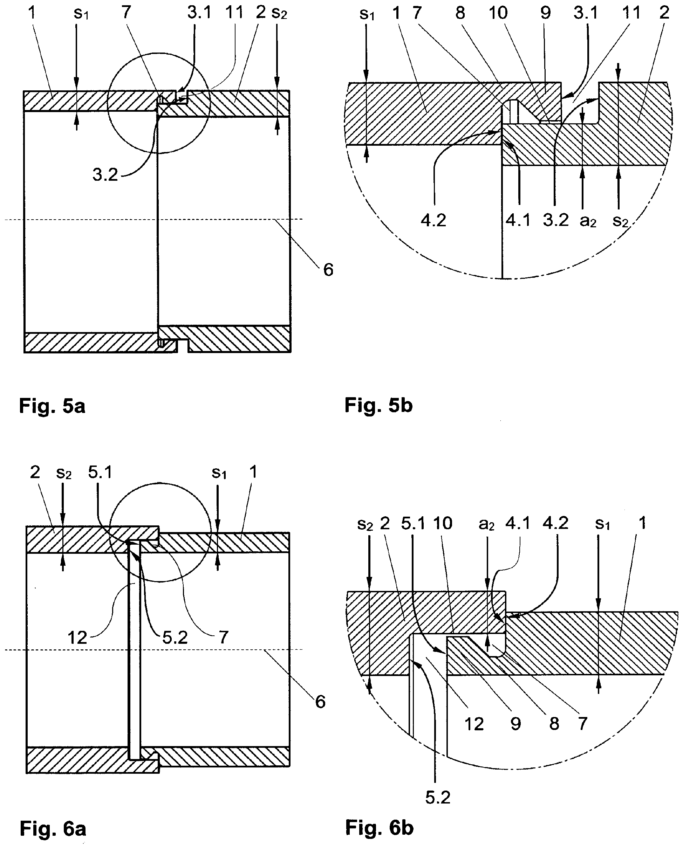

Fig. 5a    die Ausgangsgeometrie einer erfindungsgemäßen Fügestellenstruktur zweier zu verschweißender Rohre, die beide lediglich einen Absatz aufweisen und an ihrem Außenumfang bündig sind,

Fig. 5b    die Fügestellenstruktur aus Fig. 5a in vergrößerter Darstellung,

Fig. 6a    die Ausgangsgeometrie einer erfindungsgemäßen Fügestellenstruktur zweier zu verschweißender Rohre, die beide lediglich einen Absatz aufweisen und an ihrem Innenumfang bündig sind und

Fig. 6b    die Fügestellenstruktur aus Fig. 6a in vergrößerter Darstellung.

## Beschreibung der Ausführungsbeispiele

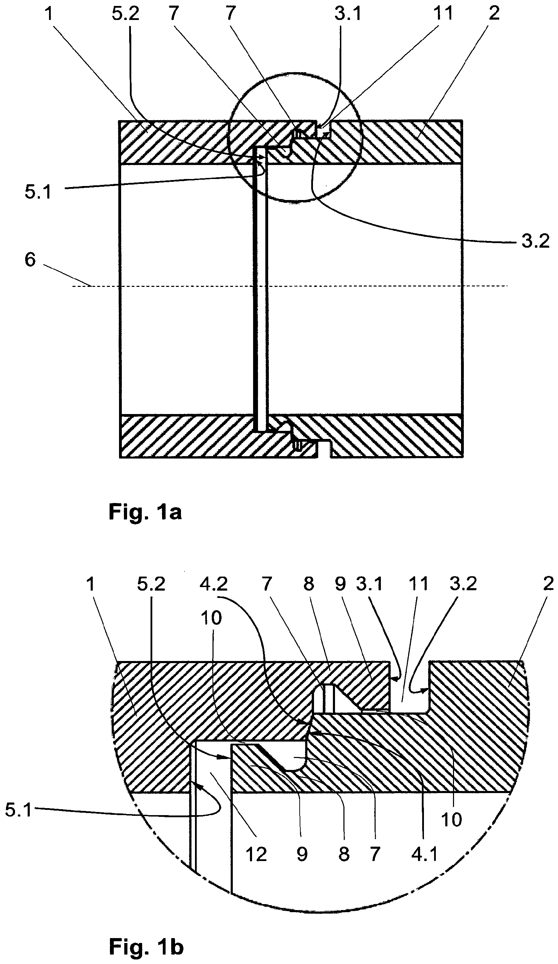

Die Fig. 1a und 1b zeigen die Ausgangsgeometrie einer erfindungsgemäßen Fügestellenstruktur zweier an ihren Stirnseiten durch Reibschweißen zu verbindender rotationssymmetrischer Rohre 1 und 2 mit gleicher Wandstärke und einer beidseitigen Schweißnahtvorbereitung. Die Rohre können beispielsweise auch als Hohlwellen ausgebildet sein. Das erste Rohr 1 weist an seiner dem zweiten Rohr 2 zugewandten Stirnseite einen zweistufigen inneren Absatz (das ist gleichbedeutend mit zwei inneren Absätzen unterschiedlichen Durchmessers) auf, so dass sich stirnseitig drei ringförmige Stirnflächen herausbilden, nämlich eine äußere Stirnfläche 3.1, eine gegenüber dieser axial zurückgesetzte mittlere Stirnfläche, die als Fügefläche 4.1 bezeichnet ist und später noch erläutert werden wird, und eine gegenüber der Fügefläche 4.1 nochmals axial zurückgesetzte innere Stirnfläche 5.1. Die Fügeflächen 4.1 und 4.2 sind im vorliegenden Beispiel konisch ausgeführt. Die Bezeichnung "innerer Absatz" bezieht sich auf die Lage des Absatzes im Innern des Rohres 1, während sich die Bezeichnung "äußere, mittlere und innere Stirnfläche" auf ihren Abstand zur Mittelachse 6 der beiden Rohre 1, 2 bezieht. Die jeweils zweite Ziffer nach dem Punkt innerhalb der Bezugszahl kennzeichnet das jeweilige Rohr 1 oder 2, zu dem das durch die erste Ziffer bezeichnete Merkmal gehört.

Das zweite Rohr 2 weist an seiner dem ersten Rohr 1 zugewandten Stirnseite einen zweistufigen äußeren Absatz (das ist gleichbedeutend mit zwei äußeren Absätzen unterschiedlichen Durchmessers) auf, der eine koaxiale Gegenform zu dem zweistufigen inneren Absatz des ersten Rohres 1 aufweist, so dass die beiden Rohre 1, 2 vor Beginn des Reibschweißprozesses mit ihren Absätzen leicht ineinander steckbar sind. Die Bezeichnung "äußerer Absatz" bezieht sich auf die Lage dieses Absatzes am Außenumfang des Rohres 2. Stirnseitig bilden sich bei dem zweiten Rohr 2 durch den zweistufigen äußeren Absatz ebenfalls drei ringförmige Stirnflächen heraus, nämlich eine äußere Stirnfläche 3.2, die der äußeren Stirnfläche 3.1 des Rohres 1 in gleicher radialer Position gegenüberliegt, eine mittlere Stirnfläche, die als Fügefläche 4.2 bezeichnet ist und später noch erläutert werden wird und der Fügefläche 4.1 des ersten Rohres 1 gegenüberliegt, und eine innere Stirnfläche 5.2, die der inneren Stirnfläche 5.1 des ersten Rohres 1 in gleicher radialer Position gegenüberliegt.

Aus Fig. 1b ist erkennbar, dass in die von ihren Stirnseiten aus gesehen jeweils erste Stufe des äußeren und inneren Absatzes, also bei dem ersten Rohr 1 in die Stufe mit dem größten Innendurchmesser, also in den Absatz mit der kleinsten Wandstärke, und bei dem zweiten Rohr 2 in die Stufe mit dem kleinsten Außendurchmesser, also ebenfalls in den Absatz mit der kleinsten Wandstärke, ein jeweils von der Mantelfläche der Stufen ausgehender Freistich 7 eingearbeitet ist, so dass ein Ringquerschnitt verbleibt. Im vorliegenden Beispiel ist der Freistich 7 jeweils in radialer Verlängerung der konischen Fügeflächen 4.1 und 4.2 der Rohre 1 und 2 nach außen bzw. nach innen ausgeführt. Die gegenüberliegende Flanke des Freistichs 7 ist sowohl beim ersten Rohr 1 als auch beim zweiten Rohr 2 konisch ausgebildet. Jeweils an der tiefsten Stelle der Freistiche 7, wo der verbleibende Ringquerschnitt der Absätze der Rohre 1, 2 am kleinsten ist, bildet sich jeweils eine Wärmedrossel 8 aus, während jeweils der zur äußeren Stirnfläche 3.1 des ersten Rohres 1 und zur inneren Stirnfläche 5.2 des zweiten Rohres 2 im Querschnitt wieder zunehmende bzw. vom Freistich 7 nicht betroffene Bereich der Absätze einen Stützsteg 9 bildet. Jedem Stützsteg 9 liegt radial jeweils eine ununterbrochene Mantelfläche eines Absatzes bzw. einer Stufe des jeweils anderen Rohres 1, 2 gegenüber.

Aus Fig. 1b ist ferner erkennbar, dass zwischen dem Stützsteg 9 des ersten Rohres 1 und der radial gegenüberliegenden ununterbrochenen Mantelfläche des äußeren Absatzes des zweiten Rohres 2 sowie dem Stützsteg 9 des zweiten Rohres 2 und der radial gegenüberliegenden Mantelflächen des inneren Absatzes des ersten Rohres 1 jeweils ein radialer Spalt 10 vorhanden ist. Die radialen Spalte 10 haben axial Verbindung zu dem jeweiligen Freistich 7.

Ein zusätzliches erfindungswesentliches Merkmal ist ebenfalls aus den Fig. 1a und 1b, das die Position der beiden miteinander zu verbindenden Rohre 1, 2 zu Beginn des Reibschweißprozesses zeigt, zu erkennen: die beiden Rohre 1, 2 berühren sich lediglich im Bereich ihrer mittleren Stirnflächen, die auch gleichzeitig die Fügeflächen 4.1 und 4.2. der beiden Rohre 1, 2 bilden. Das wird dadurch erreicht, dass auch die axiale Länge der Stufen der zweistufigen Absätze vorbestimmt ist. Es ist zu erkennen, dass sich radial gegenüberliegende Absätze beider Rohre 1, 2 axial unterschiedlich lang ausgebildet sind, so dass sich zwischen den jeweils gegenüberliegenden Stirnflächen dieser Absätze bei sich berührenden Fügeflächen 4.1 und 4.2 beider Rohre 1, 2 ein breiter äußerer und ein breiter innerer axialer Ringspalt 11, 12 ausbilden. Der äußere axiale Ringspalt 11 erstreckt sich zwischen der äußeren Stirnfläche 3.1 des ersten Rohres 1 und der äußeren Stirnfläche 3.2 des zweiten Rohres 2. Der innere axiale Ringspalt 12 erstreckt sich zwischen der inneren Stirnfläche 5.1 des ersten Rohres 1 und der inneren Stirnfläche 5.2 des zweiten Rohres 2. Die axiale Länge der Absätze bzw. Stufen richtet sich nach den Parametern der Reibschweißtechnologie, die zur Verbindung der beiden Rohre 1, 2 vorgesehen ist. Dabei ist entscheidend, dass die Anfangslänge der axialen Ringspalte 11, 12 so gewählt sein muss, dass die sich während des Reibschweißprozesses aufgrund der Plastifizierung der sich berührenden mittleren Stirnflächen der Rohre 1, 2 verkürzende Breite der axialen Ringspalte 11, 12 bis zum Abschluss des Reibschweißprozesses nicht kleiner oder gleich Null wird, d. h. dass sich die in radialer Position gegenüberliegenden äußeren Stirnflächen 3.1 und 3.2 sowie die inneren Stirnflächen 5.1 und 5.2 auch nach dem Abschluss des Reibschweißprozesses nicht, allerhöchstens gerade berühren. Damit ist gewährleistet, dass allein die mittleren Stirnflächen der Absätze bzw. Stufen, die eine unmittelbar Verbindung zu dem jeweiligen Freistich 7 haben, als Fügeflächen 4.1 und 4.2 fungieren, d. h. sich vom Beginn bis zum Ende des Reibschweißprozesses berühren und unter der Wirkung des Reibschweißprozesses erweichen.

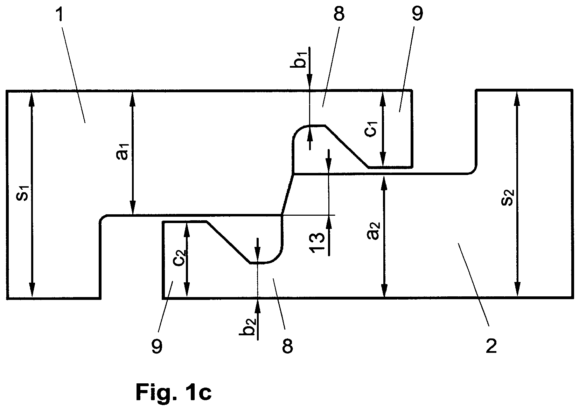

Die Fig. 1c zeigt die Fügestellenstruktur im Wandbereich der in den Fig. 1a und 1b dargestellten Reibschweißverbindung mit den für die erfindungsgemäße Fügestellenstruktur wesentlichen Größen. Die Wandstärke der Rohre 1 und 2 wurden mit $s_1$ und $s_2$ bezeichnet. Ausgehend von der Wandstärke $s_1$, $s_2$ der Rohre 1 und 2 schließt sich jeweils ein erster Absatz mit der Wandstärke $a_1$ und $a_2$ an, der den inneren horizontalen Steckbereich der Fügestruktur bildet. An den ersten Absatz schließt sich in axialer Richtung ein zweiter Absatz mit einer Wandstärke $c_1$ bzw. $c_2$ an. Durch das Verhältnis von $a_{1,2}$ zu $s_{1,2}$ ergibt sich die radiale Ausdehnung der Fügeflächen 4.1, 4.2, welche konisch oder auch rechtwinklig zur Rohrachse verlaufen kann. Die radiale Differenz der Absätze mit den Wandstärken $a_1$ und $a_2$ stellt die Überlappung 13 dar. Durch den am Übergang vom ersten zum zweiten Absatz eingearbeiteten radialen Freistich 7 ist die Wandstärke dieser Absätze auf eine minimale, nämlich die Wandstärke $b_1$ bzw. $b_2$ der Wärmedrossel 8 reduziert. Der Bereich des zweiten Absatzes, der sich axial an die Wärmedrossel 8 anschließt, stellt den Stützsteg 9 dar, so dass dessen Wandstärke $c_1$ bzw. $c_2$ der Dicke dieses Absatzes entspricht.

Für einen ausreichenden Querschnitt der Scheißnaht und zur Kraftübertragung muss die Überlappung 13, also die radiale Überschneidung der stirnseitigen Fügeflächen 4.1 und 4.2, eine minimale Größe aufweisen. Für eine Überlappung 13 von mindestens 20% der Wandstärke $s_{1,2}$ der Rohre 1 und 2, sowie für ein optimales Wirken der Wärmedrossel 8 und einer leichtgängigen Ineinanderführung der Rohre 1 und 2 ergeben sich folgende Abhängigkeiten für die in den Fig. 1a, 1b und 1c dargestellte Fügestellenstruktur:

$$0{,}6s \leq a \leq 0{,}8s$$

$$0{,}1a \leq b \leq 0{,}3a$$

$$b \leq c \leq s - a.$$

Die angegebenen Abhängigkeiten gelten für beide Rohre 1 und 2, sodass bei den genannten Größenverhältnissen keine Unterscheidung mit Hilfe der Indizes an den Wandstärken a, b, c und s erfolgt.

Anhand der zuvor beschriebenen erfindungsgemäßen Fügestellenstruktur sowie der Fig. 2a und 2b wird nachfolgend in Verbindung mit der Beschreibung des Verfahrens zum Verbinden der beiden Rohre 1, 2 durch Reibschweißen die Wirkungsweise der Erfindung näher erläutert. Zum Fügen der beiden Rohre 1, 2 werden diese mit ihren mit den zweistufigen Absätzen versehenen Enden entlang ihrer gemeinsamen Rotationsachse 6 ineinander gesteckt bis ihre mittleren Stirnflächen, also ihre Fügeflächen 4.1 und 4.2, gegeneinanderstoßen, wobei sich zwischen den Stützstegen 9 und diesen radial gegenüberliegenden ununterbrochenen Mantelflächen der Absatzstufen der radiale Spalt 10 herausbildet. Zwischen den sich mit axialem Abstand gegenüberliegenden äußeren und inneren Stirnflächen 3.1 und 3.2 sowie 5.1 und 5.2 sind die o. g. axialen Ringspalte 11 und 12 vorhanden. Der Reibschweißprozess beginnt damit, dass zumindest eines der Rohre 1, 2 in Rotation versetzt und unter Einwirkung axialer Prozesskräfte koaxial auf das andere, ggf. nicht rotierende Rohr getrieben wird. Durch den Reibvorgang unter erhöhter Axialkraft wird Reibwärme freigesetzt, welche das Material im Bereich der Fügestelle, also an den Fügeflächen 4.1 und 4.2, auf nahezu Schmelztemperatur des niedriger schmelzenden Werkstoffes erwärmt. Das Material entfestigt und beginnt zu fließen, worauf aufgrund der Axialkraft eine Wulst 14 aus der Fügestelle herausgepresst und, wie aus Fig. 2b erkennbar, von dem Hohlraum des der jeweiligen Fügefläche 4.1, 4.2 benachbarten Freistichs 7, der hier quasi als Wulstkammer dient, aufgenommen wird. Prozessgase sowie Verunreinigungen und Späne können über die radialen Spalte 10 und weiter über den äußeren Ringspalt 11 nach außen sowie über den inneren Ringspalt 12 in den Innenraum der Rohre 1, 2 entweichen bzw. gedrückt werden. Die Rohre 1, 2 verkürzen mit Einsatz der Wulstbildung stetig. Infolge der Verkürzung der Rohre 1, 2 bewegen sich die Stützstege 9 entlang ihrer radial gegenüberliegenden Mantelflächen der Absatzstufen und somit die äußeren und inneren Stirnflächen 3.1 und 3.2 sowie 5.1 und 5.2 aufeinander zu. Nachdem eine gewisse Verkürzung, welche kleiner als die Anfangsbreite der axialen Ringspalte 11, 12 ist, erreicht wurde, wird die Rotation bis zum Stillstand abgebremst und die Rohre 1, 2 mit gleicher oder höherer axialer Prozesskraft zusammengestaucht. Anders gesagt wird der Schweißprozess so lange gefahren, bis der äußere und innere axiale Ringspalt 11, 12 nahezu geschlossen ist. Die Wulstkammern, welche durch die Freistiche 7 in den Rohren 1, 2 vorgegeben sind, füllen sich dabei partiell mit dem Reibschweißwulst 13 aus der Fügestelle. Aufgrund der Beendigung der Rotationsbewegung wird der Fügestelle keine Energie mehr in Form von Reibwärme zugeführt und das Material kühlt ab und verfestigt sich wieder. Die axiale Prozesskraft wird so lange gehalten, bis die Stauchverkürzung gesättigt ist und die Rohre 1, 2 stoffschlüssig miteinander verbunden sind. Dabei hat sich, wie aus Fig. 2b zu erkennen ist, die Breite der axialen Ringspalte 11, 12 auf ein Minimum verringert. Es ist aber auch möglich, dass sich die äußeren und inneren Stirnflächen 3.1 und 3.2 sowie 5.1 und 5.2 gerade berühren. Fig. 2b zeigt, dass auch die radialen Spalte 10 nach Fertigstellung der Reibschweißverbindung noch erhalten sind.

Wie aus den Fig. 2a und 2b ferner zu erkennen ist, hat sich nach Abschluss des Reibschweißprozess eine kegelförmige Fügefläche 15, in Fig. 2b durch eine gestrichelte Linie gekennzeichnet, gebildet, welche größer ist als die ursprüngliche Kontaktfläche der konischen Fügeflächen 4.1 und 4.2 der Rohre 1 und 2. Die durch die Freistiche 7 in den äußeren und inneren Absätzen gebildeten Wärmedrosseln 8 sorgen dafür, dass die Stützstege 9 während der Reibphase im kaltfesten Zustand bleiben und somit die durch den Reibschweißprozess bedingten radialen und tangentialen Spannungen ausgleichen bzw. abfangen können. Dies äußert sich in einer Formerhaltung des Innen- und Außendurchmessers der beiden Rohre 1, 2.

In den Fig. 3a bis 6b sind vier unterschiedliche Ausführungen der erfindungsgemäßen Fügestellenstruktur für das Reibschweißen von Rohren mit einseitiger Schweißnahtvorbereitung dargestellt, die maximal einen Absatz aufweisen. Die Darstellungen zeigen die Fügestellenstruktur jeweils vor Beginn des Reibschweißprozesses. Die Positionen in diesen Figuren, die mit den in den Fig. 1a bis 2b dargestellten Positionen übereinstimmen, wurden mit den gleichen Bezugszahlen wie in Fig. 1a bis 2b versehen. So zeigen die Fig. 3a bis 4b zwei durch Reibschweißen zu verbindende Rohre 1, 2, von denen lediglich eines von beiden einen Absatz aufweist, nämlich in Fig. 3a und 3b einen inneren Absatz und in Fig. 4a und 4b einen äußeren Absatz, wobei in diesen Figuren das Rohr, das den Absatz aufweist, mit der Bezugszahl 1 und das Rohr ohne eine solche Nahtvorbereitung mit der Bezugszahl 2 versehen wurde. In jedem Fall ist aber in der Mantelfläche dieses einen Absatzes der die Wärmedrossel 8 und den Stützsteg 9 bildende Freistich 7 vorgesehen. Die Fügeflächen 4.1 (Fig. 3) und 4.2 (Fig. 4) werden von der zurückgesetzten inneren Stirnfläche des ersten Rohres 1 (Fig. 3) bzw. der zurückgesetzten äußeren Stirnfläche des zweiten Rohres 2 (Fig. 4) gebildet. In beiden Ausführungen ist kein axialer Spalt vorhanden, da der jeweils nicht die Fügefläche 4.1 bzw. 4.2 bildenden äußeren Stirnfläche 3.1 des ersten Rohres 1 bzw. der inneren Stirnfläche 5.2 des zweiten Rohres keine andere Stirnfläche gegenübersteht. Bei den hier gezeigten Fügestellenstrukturen wird aber entweder an der äußeren Mantelfläche (Fig. 3) oder der inneren Mantelfläche (Fig. 4) keine radiale Bündigkeit der Rohre 1, 2 erreicht. Für einen ausreichenden Querschnitt der Scheißnaht und zur Kraftübertragung muss die Überlappung 13, also die radiale Überschneidung der stirnseitigen Reibflächen 4.1 und 4.2, eine minimale Größe aufweisen. Für eine Überlappung 13 von mindestens 20% der Wandstärke $s_1$ der Rohre 1 und 2, sowie für ein optimales Wirken der Wärmedrossel und einer leichtgängigen Ineinanderführung der Rohre 1 und 2 ergeben sich folgende Abhängigkeiten für die in den Fig. 3a bis Fig. 4b dargestellte Fügestellenstruktur:

$$0{,}1s_1 \leq b \leq 0{,}3s_1$$

$$b \leq c \leq 0{,}8s_1$$

$$s_2 \geq s_1 - c$$

Die Indizes 1 und 2 wurden dem jeweiligen Rohr 1 bzw. 2 zugeordnet.

Eine radiale Bündigkeit der Rohre 1, 2 wird immer dann erreicht, wenn mindestens einer der Durchmesser der Rohre 1, 2 gleich groß ist, die Anzahl der Absätze im Bereich der Fügestellen der beiden Rohre 1, 2 gleich ist und die Durchmesser der Absätze auch gleich dimensioniert sind. So zeigen die Fig. 5a und 5b zwei durch Reibschweißen zu verbindende Rohre 1, 2, deren Außendurchmesser gleich sind, so dass sie am Außenumfang bündig sind, und Fig. 6a und 6b deren Innendurchmesser gleich sind, so dass sich ein bündiger Innenumfang ergibt. Während das erste Rohr 1 einen inneren Absatz aufweist, weist das zweite Rohr einen kongruenten äußeren Absatz auf. Der Freistich 7 ist jeweils in den Absatz des dünnwandigeren Rohres 1, 2 eingebracht, also bei der außen bündigen Ausführung der Fig. 5 in den inneren Absatz des Rohres 1 und bei der innen bündigen Ausführung gem. Fig. 6 in den äußeren Absatz des Rohres 2.

Bei gleicher Anzahl von Absätzen im Fügebereich der Rohre 1, 2 stehen sich jedoch zusätzlich zu den Fügeflächen 4.1 und 4.2, die die Fügestelle der Reibschweißverbindung bilden, immer noch mindestens zwei äußere Stirnflächen 3.1 und 3.2 (Fig. 5) oder zwei innere Stirnflächen 5.1 und 5.2 (Fig. 6) gegenüber, zwischen denen, wie oben beschrieben, ein ausreichend breiter äußerer axialer Ringspalt 11 bzw. ein ausreichend breiter innerer axialer Ringspalt 12 aus den genannten Gründen zu Beginn des Reibschweißprozesses vorhanden sein muss. Ebenfalls muss hier für einen ausreichenden Querschnitt der Scheißnaht und zur Kraftübertragung die Überlappung 13, also die radiale Überschneidung der stirnseitigen Reibflächen 4.1 und 4.2, eine minimale Größe aufweisen. Für eine Überlappung 13 von mindestens 20% der Wandstärke $s_1$ der Rohre 1 und 2, sowie für ein optimales Wirken der Wärmedrossel und einer leichtgängigen Ineinanderführung der Rohre 1 und 2 ergeben sich folgende Abhängigkeiten für die in den Fig. 5a bis 6b dargestellte Fügestellenstruktur:

$$0{,}1s_1 \leq b \leq 0{,}3s_1$$

$$b \leq c \leq 0{,}8s_1$$

$$a_2 \geq s_1 - c$$

Die Indizes 1 und 2 wurden dem jeweiligen Rohr 1 bzw. 2 zugeordnet.

**Bezugszahlenliste**

| | |
|---|---|
| 1 | Erstes Rohr |
| 2 | Zweites Rohr |
| 3 | Äußere Stirnflächen 3.1 Äußere Stirnfläche des ersten Rohres 1 3.2 Äußere Stirnfläche des zweiten Rohres 2 |
| 4 | Mittlere Stirnflächen 4.1 Fügefläche des ersten Rohres 1 4.2 Fügefläche des zweiten Rohres 2 |
| 5 | Innere Stirnflächen 5.1 Innere Stirnfläche des ersten Rohres 1 5.2 Innere Stirnfläche des zweiten Rohres 2 |
| 6 | Mittelachse |
| 7 | Freistich |
| 8 | Wärmedrossel |
| 9 | Stützsteg |
| 10 | Radialer Spalt |
| 11 | Äußerer axialer Ringspalt |
| 12 | Innerer axialer Ringspalt |
| 13 | Überlappung der Fügeflächen |
| 14 | Wulst |
| 15 | Fügefläche nach dem Reibschweißen |
| $a_1, a_2$ | Wandstärke des ersten Absatzes des Rohres 1 bzw. 2 |
| $b_1, b_2$ | Wandstärke der Wärmedrossel des Rohres 1 bzw. 2 |
| $c_1, c_2$ | Wandstärke des Stützsteges des Rohres 1 bzw. 2 |
| $s_1, s_2$ | Wandstärke des Rohres 1 bzw. 2 |

**Patentansprüche**

1. Durch aufgleitendes Reibschweißen zu verbindende Bauteile (1, 2) mit einer Fügestellenstruktur, wobei die zu verbindende Enden der Bauteile (1, 2) jeweils einen dünnwandigen koaxialen Steckbereich aufweisen, und diese dünnwandigen Steckbereiche beim Reibschweißen koaxial ineinander greifen und der dünnwandige Steckbereich mindestens eines der Bauteile (1, 2) mindestens einen Absatz mit einem gegenüber seinem Außendurchmesser kleineren Durchmesser aufweist und die durch den Absatz gebildete gegenüber der Stirnfläche dieses Bauteils (1, 2) axial zurückgesetzte ringförmige Stirnfläche als Fügefläche (4.1, 4.2) für das Reibschweißen ausgebildet ist, gegen die die Stirnfläche des anderen Bauteils stößt, und wobei sich zwischen den Mantelflächen der ineinander greifenden Steckbereiche ein radialer Spalt (10) befindet, **dadurch gekennzeichnet,**

- **dass** der mindestens eine Absatz des mindestens einen Bauteils (1, 2), an dem sich die axial zurückgesetzte ringförmige Fügefläche (4.1, 4.2) befindet, mit einem radialen Freistich (7) derart versehen ist, dass stirnseitig ein im Durchmesser unveränderter Bereich dieses Absatzes einen radialen Stützsteg (9) bildet, der über eine in ihrem Querschnitt reduzierte Wärmedrossel (8) mit dem mindestens einen Bauteil (1, 2) verbunden ist, und
- **dass** die Länge jedes Absatzes so ausgelegt ist, dass bei Berührung der Stirnfläche des einen Bauteils (1, 2) mit der ringförmigen Fügefläche (4.1, 4.2) des anderen Bauteils (1, 2) die anderen sich in gleicher radialer Position gegenüberliegenden Stirnflächen dieser Bauteile (1, 2) bis zum Abschluss des Reibschweißvorgangs immer noch freiliegend sind.

2. Bauteile nach Anspruch 1,
**dadurch gekennzeichnet,**
**dass** die Anzahl der Absätze an den beiden miteinander zu verbindenden Bauteilen (1, 2) gleich ist.

3. Bauteile nach Anspruch 1 oder 2,
**dadurch gekennzeichnet,**
**dass** die Fügestellenstruktur jedes Bauteils (1, 2) aus mindestens zwei Absätzen besteht und der Freistich (7) jeweils in den von der Stirnfläche des Bauteils (1, 2) aus gesehen ersten Absatz eingebracht ist.

4. Bauteile nach Anspruch 1, 2 oder 3,
**dadurch gekennzeichnet,**
**dass** die Fügeflächen (4.1, 4.2) kegelstumpfartig ausgebildet sind.

5. Bauteile nach einem der Ansprüche 1 bis 4,
**dadurch gekennzeichnet,**
**dass** die eine Flanke des Freistichs (7) in radialer Verlängerung der ringförmigen Fügefläche (4.1, 4.2) verläuft.

6. Bauteile nach einem der Ansprüche 1 bis 5,
**dadurch gekennzeichnet,**
**dass** die andere, der Fügefläche (4.1, 4.2) gegenüberliegende Flanke des Freistichs (7) in einem Winkel kleiner 90° zur Längsachse (6) der Bauteile (1, 2) verläuft.

7. Bauteile nach einem der Ansprüche 1 bis 6,
**dadurch gekennzeichnet,**
**dass** der mindestens eine Absatz die Wandstärke (a) von mindestens dem 0,6fachen der Wandstärke (s) des Bauteils im koaxialen Steckbereich beträgt.

8. Bauteile nach einem der Ansprüche 1 bis 7,
**dadurch gekennzeichnet,**
**dass** die Wandstärke (b) der Wärmedrossel (8) des Bauteils das 0,1 bis 0,3fache der Wandstärke (a) des mindestens einen Absatzes des Bauteils in seinem koaxialen Steckbereich beträgt.

9. Bauteile nach einem der Ansprüche 1 bis 8,
**dadurch gekennzeichnet,**
**dass** die Wandstärke (c) des Stützsteges (9) des Bauteils kleiner gleich der Differenz aus der Wandstärke (s) des Bauteils in seinem koaxialen Steckbereich und dem 1,1 fachen der Wandstärke (a) des mindestens einen Absatzes des Bauteils ist.

10. Verfahren zum Verbinden von Bauteilen durch aufgleitendes Reibschweißen, deren zu verbindende Enden jeweils einen dünnwandigen koaxialen Steckbereich aufweisen, wobei der dünnwandige Steckbereich mindestens eines der Bauteile (1, 2) mindestens einen Absatz mit einem gegenüber seinem Außendurchmesser kleineren Durchmesser aufweist und die durch den Absatz gebildete gegenüber der Stirnfläche dieses Bauteils (1, 2) axial zurückgesetzte ringförmige Stirnfläche als Fügefläche (4.1, 4.2) für das Reibschweißen ausgebildet ist, wobei zuerst die Bauteile (1, 2) mit ihren Steckbereichen koaxial ineinander gesteckt werden bis die Stirnfläche des einen Bauteils (1, 2) gegen die Fügefläche (4.1, 4.2) des anderen Bauteils (1, 2) stößt, wobei sich zwischen den Mantelflächen der ineinander greifenden Steckbereiche ein radialer Spalt (10) ausbildet, und anschließend mindestens eines der Bauteile (1, 2) in Rotation versetzt wird und die Bauteile (1, 2) durch eine axial wirkende Prozesskraft gegeneinander gedrückt werden bis der Werkstoff zumindest eines der Bauteile (1, 2) sich erweicht,
**dadurch gekennzeichnet,**

- **dass** der mindestens eine Absatz des mindestens einen Bauteils (1, 2), an dem sich die axial zurückgesetzte ringförmige Fügefläche (4.1, 4.2) befindet, mit einem radialen Freistich (7) derart versehen wird, dass an diesem Absatz stirnseitig ein im Durchmesser unveränderter Bereich verbleibt, der dadurch einen radialen Stützsteg (9) bildet und über eine in ihrem Querschnitt reduzierte Wärmedrossel (8) mit dem mindestens einen Bauteil (1, 2) verbunden ist, und
- **dass** die Länge jedes Absatzes so ausgelegt wird, dass zu Beginn des Reibschweißprozesses zwischen der Stirnfläche des einen Bauteils (1, 2) und der in gleicher radialer Position gegenüberliegenden Stirnfläche des anderen Bauteils (1, 2) ein breiter axialer Ringspalt (11, 12) vorhanden ist, der sich während des Wirkens der axialen Prozesskraft auf die Bauteile (1, 2) zum Ende des Reibschweißprozesses auf ein Minimum verringert.

11. Verfahren nach Anspruch 10,
**dadurch gekennzeichnet,**
**dass** als Bauteile (1, 2), die durch aufgleitendes Reibschweißen miteinander verbunden werden, Hohlwellen verwendet werden, die die Merkmale eines der Ansprüche 2 bis 9 aufweisen.

**Claims**

1. Components (1, 2) with a joint structure to be connected through slide-on friction welding, wherein the ends of the components (1, 2) to be connected each have a thin-walled connecting area, and during friction welding these thin-walled connecting areas coaxially interlock and the thin-walled connecting area of at least one of the components (1, 2) has at least one recess with a smaller outer diameter than its outer diameter and the annular end face formed by the recess with is axially set-back vis-à-vis the end face of this component (1, 2) is configured as a joint surface (4.1, 4.2) for friction welding, comes into contact with the end face of the other component and wherein between the mantle surfaces of the interlocking connecting area there is a radial gap (10) **characterised in that**

   - the at least one recess of the at least one component (1, 2) on which the axially set-back annular joint surface (4.1, 4.2) is located, is provided with a radial undercut (7) so that on the end face an area of this recess unchanged in diameter forms a supporting web (9) which via a thermal choke (8) reduced in cross-section is connected to the at least one component (1, 2) and
   - **in that** the length of the recess is designed so that on contact of the face end of one component (1, 2) with the annular joint surface (4.1, 4.2) of the other components (1, 2) the end faces of these components (1, 2) opposite each other in the same radial position still remain exposed until the completion of the friction welding procedure.

2. Components according to claim 1 **characterised in that** the number of recesses on the two components (1, 2) to be connected to each other is identical.

3. Components according to claim 1 or 2 **characterised in that** the joint site structure of each component (1, 2) comprises at least two recesses and the undercut (7) in each case is produced in the first recess seen from the end face of the component (1, 2).

4. Components according to claim 1, 2 or 3 **characterised in that** the joint surfaces (4.1, 4.2) are in the shape of a truncated cone.

5. Components according to any one of claims 1 to 4 **characterised in that** one flank of the undercut (7) extends in radial prolongation of the annular joint surface (4.1, 4.2).

6. Components according to any one of claims 1 to 5 **characterised in that** the other flank of the undercut (7), opposite the joint surface (4.1, 4.2), extends at an angle of less than 90 ° to the longitudinal axis (6) of the components (1, 2).

7. Components according to any one of claims 1 to 6 **characterised in that** the at least one recess has the wall thickness (a) of at least 0.6 times the wall thickness (s) of the component in the coaxial connecting area.

8. Components according to any one of claims 1 to 7 **characterised in that** the wall thickness (b) of the thermal choke (8) of the component is 0.1 to 0.3 times the wall thickness (a) of the at least one recess of the component in its coaxial connecting area.

9. Components according to any one of claims 1 to 8 **characterised in that** the wall thickness (c) of the supporting web (9) of the component is smaller or equal to the difference of the wall thickness (s) of the component in its axial connecting area and 1.1 times the wall thickness (a) of the at least one recess of the component.

10. Method of connecting components through slide-on friction welding, the ends of which to be connected each have a thin-walled coaxial connecting area, wherein the thin-walled connecting area of at least one of the components (1, 2) has at least one recess with a smaller diameter than its outer diameter and the annular end face formed by the recess which is axially set-back vis-à-vis the end face of this component (1, 2) is configured as a joint surface (4.1, 4.2) for friction welding, wherein first of all the component (1, 2) are coaxially insertd into each other with their connecting areas until the end face of one component (1,2) comes into contact with the end joint surface (4.1, 4.2) of the other component (1, 2) wherein between the mantle surfaces of the interlocking connecting areas a radial gap (10) is formed, and subsequently at least one of the components (1, 2) is rotated and the components (1, 2) are pressed against each other through an axially acting process force until the material of at least one of the components (1, 2) softens,

**characterised in that**

- the at least one recess of the at least one component (1, 2) on which the axially set-back annular joint surface (4.1, 4.2) is located, is provided with a radial undercut (7) so that on this recess at the end face an area unchanged in diameter remains which thereby forms a supporting web (9) and via a thermal choke (8) reduced in cross-section is connected to the at least one component (1, 2) and

- the length of each recess is designed so that at the beginning of the friction welding process a broad axial annular gap (11, 12) is present between the end face of one component (1, 2) and the opposite end face of the other component (1, 2) in the same radial position, which during the action of the axial process force on the components (1, 2) is reduced to a minimum by the end of the friction welding process.

**11.** Method according to claim 10 **characterised in that** as components (1, 2) connected to each other by slide-on friction welding, hollow shafts are used which have the features of claims 2 to 9.


**Revendications**

**1.** Éléments constitutifs (1, 2), destinés à être assemblés par soudage par friction glissant, pourvus d'une structure à jointures, les extrémités qui doivent être assemblées des éléments constitutifs (1, 2) comportant chacune une zone d'enfichage coaxiale à paroi mince et lors du soudage par friction, lesdites zones d'enfichage coaxiales à paroi mince s'engageant les unes dans les autres en direction coaxiale et la zone d'enfichage coaxiale d'au moins l'un des éléments constitutifs (1, 2) comportant au moins un talon disposant d'un diamètre inférieur au diamètre extérieur de celle-ci et la face frontale annulaire formée par le talon, en retrait axial par rapport à la face frontale dudit élément constitutif (1, 2) étant conçue en tant que surface de jonction (4.1, 4.2) pour le soudage par friction, contre laquelle aboute la face frontale de l'autre élément constitutif et entre les surfaces d'enveloppe des zones d'enfichage s'enfichant les unes dans les autres se trouvant une fente radiale (10),
**caractérisés**

- **en ce que** l'au moins un talon de l'au moins un élément constitutif (1, 2) sur lequel se trouve la surface de jonction (4.1, 4.2) annulaire en retrait axial est muni d'un dégagement (7) radial de telle sorte que sur la face frontale, une zone à diamètre non modifié dudit talon forme un listel d'appui (9) radial, qui par l'intermédiaire d'un étrangleur thermique (8) à section transversale réduite est assemblé avec l'au moins un élément constitutif (1, 2) et

- **en ce que** la longueur de chaque talon est dimensionnée de telle sorte que lors du contact de la face frontale de l'un des éléments constitutifs (1, 2) avec la surface de jonction (4.1, 4.2) annulaire de l'autre élément constitutif (1, 2), les autres faces frontales mutuellement en vis-à-vis dans la même position radiale desdits éléments constitutifs (1, 2) soient encore libres jusqu'à l'achèvement du processus de soudage par friction.

**2.** Eléments constitutif selon la revendication 1, **caractérisés en ce que** le nombre de talons sur les deux éléments constitutifs (1, 2) qui doivent être assemblés l'un à l'autre est identique.

**3.** Eléments constitutif selon la revendication 1 ou 2, **caractérisés en ce que** la structure à jointures de chaque élément constitutif (1, 2) est constituée d'au moins deux talons et **en ce que** le dégagement (7) est ménagé respectivement dans le premier talon, vu à partir de la face frontale de l'élément constitutif (1, 2).

**4.** Eléments constitutif selon la revendication 1, 2 ou 3, **caractérisés en ce que** les surfaces de jonction (4.1, 4.2) sont conçues sous forme tronconique.

**5.** Eléments constitutif selon l'une quelconque des revendications 1 à 4, **caractérisés en ce que** l'un des flancs du dégagement (7) s'écoule dans le prolongement radial de la surface de jonction (4.1, 4.2) annulaire.

**6.** Eléments constitutif selon l'une quelconque des revendications 1 à 5, **caractérisés en ce que** l'autre flanc du dégagement (7) situé au vis-à-vis de la surface de jonction (4.1, 4.2) s'écoule sous un angle inférieur à 90 ° vers l'axe longitudinal (6) des éléments constitutifs (1, 2).

**7.** Eléments constitutif selon l'une quelconque des revendications 1 à 6, **caractérisés en ce que** l'au moins un talon présente une épaisseur de paroi (a) correspondant à au moins 0,6 fois l'épaisseur de paroi (s) de l'élément constitutif dans la zone d'enfichage coaxiale.

**8.** Eléments constitutif selon l'une quelconque des revendications 1 à 7, **caractérisés en ce que** l'épaisseur de paroi (b) de l'étrangleur thermique (8) de l'élément constitutif correspond à de 0,1 à 0,3 fois l'épaisseur de paroi (a) de l'au moins un talon de l'élément constitutif dans sa zone d'enfichage coaxiale.

**9.** Eléments constitutif selon l'une quelconque des revendications 1 à 8, **caractérisés en ce que** l'épaisseur de paroi (c) du listel d'appui (9) de l'élément constitutif est inférieure ou égale à la différence entre l'épaisseur de paroi (s) de l'élément constitutif dans sa zone d'enfichage coaxiale et 1,1 fois l'épaisseur de paroi (a) de l'au moins un talon de l'élément constitutif.

**10.** Procédé, destiné à assembler des éléments constitutifs par soudage par friction glissant, dont les extrémités qui doivent être assemblées comportent chacune une zone d'enfichage coaxiale à paroi mince, la zone d'enfichage à paroi mince d'au moins l'un des éléments constitutifs (1, 2) comportant au moins un talon avec un diamètre inférieur par rapport au diamètre extérieur de celle-ci et la face frontale annulaire formée par le talon, en retrait axial par rapport à la face frontale dudit élément constitutif (1, 2) étant conçue en tant que surface de jonction (4.1, 4.2) pour le soudage par friction, lors duquel on enfiche d'abord les éléments constitutifs (1, 2) de manière coaxiale l'un dans l'autre par leurs zones d'enfichage, jusqu'à ce que la face frontale de l'un des éléments constitutifs (1, 2) aboute la surface de jonction (4.1, 4.2) de l'autre élément constitutif (1, 2), en formant entre les surfaces d'enveloppe des zones d'enfichage s'engageant l'une dans l'autre une fente radiale (10) et ensuite on amène en rotation au moins l'un des éléments constitutifs (1, 2) et on presse l'un contre l'autre les éléments constitutifs (1, 2) par une force de processus agissant en direction axiale, jusqu'à ce que la matière d'au moins l'un des éléments constitutifs (1, 2) ramollisse,
**caractérisé**

- **en ce qu'**on munit d'un dégagement radial (7) l'au moins un talon de l'au moins un élément constitutif (1, 2), sur lequel se trouve la surface de jonction (4.1, 4.2) annulaire en retrait axial de telle sorte que sur la face frontale dudit talon, il reste une zone de diamètre non modifié qui forme de ce fait un listel d'appui (9) radial et qui par l'intermédiaire d'un étrangleur thermique (8) à section transversale réduite, est assemblée avec au moins un élément constitutif (1, 2) et
- **en ce qu'**on dimensionne la longueur de chaque talon de telle sorte qu'au début du processus de soudage par friction, soit présente entre la face frontale de l'un des éléments constitutifs (1, 2) et la face frontale située en vis-à-vis dans la même position radiale de l'autre élément constitutif (1, 2) une large fente annulaire (11, 12) radiale, qui pendant l'action de la force de processus axiale sur les éléments constitutif (1, 2) se réduit à un minimum à la fin du processus de soudage par friction.

**11.** Procédé selon la revendication 10, **caractérisé en ce qu'**on utilise comme éléments constitutifs (1, 2) que l'on assemble les uns aux autres par soudage par friction glissant des arbres creux qui présentent les caractéristiques de l'une quelconque des revendications 2 à 9.

**Fig. 1a**

**Fig. 1b**

Fig. 1c

**Fig. 2a**

**Fig. 2b**

**Fig. 3a**

**Fig. 3b**

**Fig. 4a**

**Fig. 4b**

**Fig. 5a**

**Fig. 5b**

**Fig. 6a**

**Fig. 6b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4022303 A1
- DE 10336668 A1
- DE 102008064267 A1
- DE 102004019012 A1
- DE 4022447 A1
- JP 59007490 A
- DE 19934855 C1